# EUROPEAN PATENT SPECIFICATION

(11) **EP 3 944 998 B1**
(45) Date of publication and mention of the grant of the patent: **17.08.2022**
(21) Application number: 21185509.3
(22) Date of filing: 14.07.2021
(51) Int. Cl.: B60T 13/74, F16D 65/14, F16D 65/28

(54) **ELECTRONIC PARKING BRAKE ACTUATOR**
AKTUATOR FÜR ELEKTRONISCHE FESTSTELLBREMSE
ACTIONNEUR DE FREIN DE STATIONNEMENT ÉLECTRONIQUE

(30) Priority: 28.07.2020 CN 202010740065
(43) Date of publication of application: 02.02.2022
(73) Proprietor: Hufan Automobile Electronic System Co., Ltd., Huzhou City, Zheijiang 313000 (CN)
(72) Inventor: YANG, Wenjun, Tianzihu Town, Anji County, Huzhou City, 313000 (CN); JIAO, Sheng, Tianzihu Town, Anji County, Huzhou City, 313000 (CN)
(74) Representative: Fezzardi, Antonio

(56) References cited:
- CN-A- 105 946 836
- CN-A- 111 284 468
- DE-A1-102010 032 053
- KR-A- 20190 047 173

## Description

### TECHNICAL FIELD

The present invention relates to an electronic parking brake actuator.

### BACKGROUND

In modern automobile technology, the electronic parking brake is also called electronic handbrake, it refers to a technology that integrates temporary braking during driving and long-term braking after parking, and realizes parking braking by electronic control. Compared with the traditional parking brake (hydraulic parking and cable-type parking mechanism), its advantage is that the driver can directly push/pull the parking electric control switch to drive the motor to achieve parking, rather than using hands or feet to exert a large operating force on the parking rod mechanism of the vehicle to achieve parking.

The actuator of the electronic parking brake includes a motor and a transmission mechanism. The traditional mechanism reduces the output speed of the motor while increasing the output torque transmitted to the brake caliper to realize the parking function. The transmission mechanism can adopt a variety of transmission modes, such as belt transmission mechanism, worm transmission mechanism, cylindrical gear transmission mechanism, planetary gear transmission mechanism and so on. In order to obtain a specific reduction ratio, a multi-stage transmission can also be used. Compared with its transmission mode, the planetary gear transmission has the advantages of high reduction ratio, compact structure and stable operation. DE 10 2010 032 053 A1 discloses a sub-assembly for an electro-mechanical brake actuator of an electric parking brake. The sub-assembly has a drive device for generating torque, where a transmission device has three gear stages in a row for transmitting the torque.

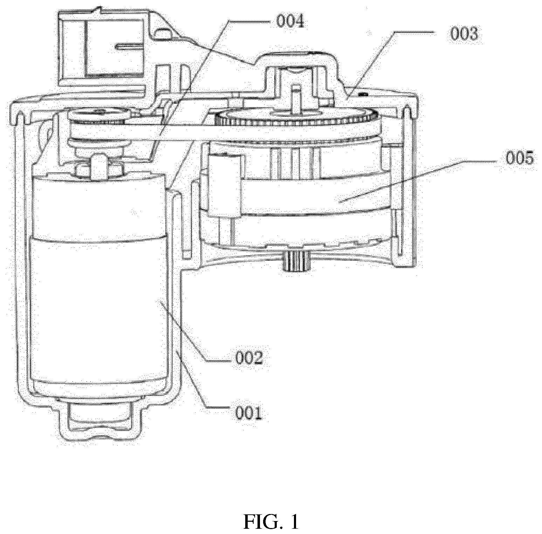

FIG. 1 is a schematic diagram of a current common electronic parking brake actuator. As shown in FIG. 1, the electronic parking brake actuator includes a housing 001, an upper cover 003, a motor 002 placed in the housing 001. A belt transmission mechanism 004 and the planetary gear transmission mechanism 005 are connected downstream of the motor 002 in sequence. The belt transmission mechanism 004 is driven by the motor 002 to reduce the speed of the motor 002 and increase the torque, and output the torque to the caliper of the brake through the output component, thereby realizing the parking function.

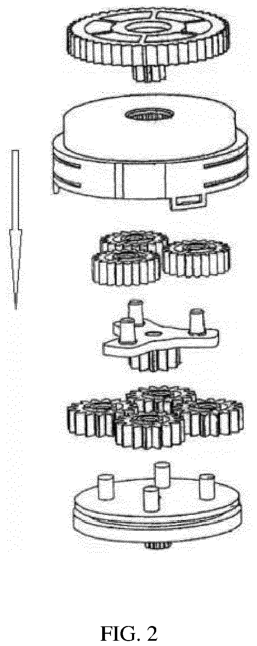

As shown in FIG. 2, the common planetary gear transmission mechanism includes the following transmission components: an inner ring gear, a sun gear, a planet carrier, and two to four planet gears mounted on the planet carrier. The planetary gear is engaged with the ring gear and the sun gear. The inner gear ring is a fixed part, the sun gear is connected with an external driving device (belt transmission mechanism) as a driving part, and the planet carrier is a driven part. Driven by the sun gear, the planetary gear can rotate and revolve along the inner gear, thereby driving the planetary carrier to rotate and output torque. As shown in FIG. 2, the arrow direction is the torque transmission direction of a common planetary gear transmission, and the torque output point (the output part of the planet carrier) is located at the far end of the torque input point (sun gear) in the axial direction. Therefore, in order to obtain sufficient braking torque (reduction ratio), the common electronic parking brake actuator can only be arranged in a coaxially stacked multi-stage planetary gear transmission mechanism, and the planet carrier output part of the previous stage planetary gear transmission mechanism also serves as the sun gear of the next-stage planetary gear transmission mechanism, such that torque can continue to be transmitted.

As an alternative to the transmission parking brake, the limitation of this common electronic parking brake actuator is that since the two-stage planetary gear transmission mechanism is coaxially stacked, its axial dimension is relatively large, and it has high requirements for longitudinal (axial) space when assembling the whole vehicle, and needs to make greater adjustments to peripheral parts.

It is relatively easy to adjust for new or renewal designs of vehicles. However, for models that have been mass-produced, large adjustments in parts will inevitably cause problems such as increased man-hours and reduced production efficiency, especially for safety-related parts such as suspension and chassis, the adjustment of parts may even have an adverse effect on the performance of the entire vehicle.

Therefore, in order to reduce the adjustment range of related parts and improve production efficiency, higher requirements are put forward for the external dimensions of the electronic parking brake actuator.

### SUMMARY

The technical problem to be solved by the present invention is to provide an electronic parking brake actuator with simpler structure, higher precision, higher production and transmission efficiency in view of the shortcomings of the existing electronic parking brake actuator.

The technical problem to be solved by the present invention can be realized by the following technical solutions:

An electronic parking brake actuator, including:
a gearbox body provided with a motor accommodation cavity, a gear train accommodation cavity, and a connector socket provided on an outer side of the gearbox body; the connector socket being provided with an electrical connector, the motor accommodation cavity being communicated with the gear train accommodation cavity at a first end in the axial direction; the gear train accommodation cavity being provided with an inner gear ring inside, and the gearbox body being provided with an on output spline hole at a position corresponding to a center of the inner gear ring;
a gearbox cover configured for covering the gearbox body and sealing the gear train accommodation cavity;
a motor arranged in the motor accommodation cavity, an output shaft of the motor extending into the gear train accommodation cavity and being fixed with a first gear;
a primary transmission gear assembly rotatably fitted in the gear train accommodation cavity, the primary transmission gear assembly comprising a second gear and a third gear that are coaxially arranged and rotate synchronously, wherein the second gear being engaged with the first gear;
a secondary transmission gear assembly rotatably fitted in the gear train accommodation cavity, the secondary transmission gear assembly comprising a fourth gear and a sun gear that are coaxially arranged and rotate synchronously, wherein the fourth gear being engaged with the third gear;
a planetary gear transmission assembly comprising a planetary gear carrier, a plurality of planetary gears and an output spline, the plurality of planetary gears being rotatably mounted on a first end surface of the planetary gear carrier in an axial direction, the output spline being fixedly fitted on a second end surface of the planetary gear carrier in the axial direction, all of the plurality of planetary gears being engaged with the sun gear and the inner ring gear, the output spline extending out of the gearbox body from the output spline hole;
a central axis of the first gear is paralleled to a central axis of the planetary gear transmission assembly, a central axis of the secondary transmission gear assembly, and the central axis of the secondary transmission gear assembly coincides with the central axis of the planetary gear transmission assembly.

In a preferred embodiment according to the present invention, a second end in the axial direction of the motor accommodation cavity is covered with a motor cover, and the motor cover encloses the motor in the motor accommodation cavity, a motor wave spring is provided between the motor cover and the motor.

In a preferred embodiment according to the present invention, the primary transmission gear assembly is sleeved on a primary gear positioning pin, a lower end of the primary gear positioning pin is pressed into the gearbox body in an online press-fitting manner.

In a preferred embodiment according to the present invention, the secondary transmission gear assembly is mounted on the gearbox cover through a secondary gear positioning pin, wherein an upper end of the secondary gear positioning pin is mounted on the gearbox cover, and a lower end of the secondary gear positioning pin is press-fitted on the sun gear; the sun gear is manufactured by powder metallurgy, and the fourth gear is injection-molded with a middle part between the sun gear and the secondary gear positioning pin as an insert.

In a preferred embodiment according to the present invention, the planetary gear carrier is uniformly provided with a plurality of planetary gear shafts circumferentially on the first end surface in the axial direction, and the plurality of planetary gear shafts, the planetary gear carrier and the output spline are integrally injection molded; each planetary gear is assembled on a corresponding planetary gear shaft.

### Beneficial effect

Due to the adoption of the above technical solution, the present invention has the advantages of simpler structure, higher precision, higher production and transmission efficiency.

### BRIEF DESCRIPTION OF DRAWINGS

FIG. 1 is a schematic diagram illustrating a common electronic parking brake actuator.
FIG. 2 is an exploded view illustrating a planetary gear transmission mechanism of a common electronic parking brake actuator
FIG. 3 is a three-dimensional schematic diagram illustrating an appearance of the electronic parking brake actuator according to the present invention.
FIG. 4 is an exploded schematic diagram illustrating an electronic parking brake actuator according to the present invention.
FIG. 5 is a schematic diagram illustrating an assembly of a primary gear positioning pin between the gearbox body in the electronic parking brake actuator according to the present invention.
FIG. 6 is a schematic diagram illustrating an assembly process of a primary gear positioning pin between a gearbox body in the electronic parking brake actuator according to the present invention.
FIG. 7 is a schematic diagram illustrating an assembly between a secondary gear positioning pin and a secondary transmission gear assembly in the electronic parking brake actuator according to the present invention.
FIG. 8 is a schematic diagram illustrating an assembly process between a secondary gear positioning pin and a sun gear in the secondary transmission gear assembly in the electronic parking brake actuator according to the present invention.
FIG. 9 is a schematic diagram illustrating an assembly between a secondary gear positioning pin and a sun gear in the secondary transmission gear assembly in the electronic parking brake actuator according to the present invention.
FIG. 10 is a three-dimensional schematic diagram illustrating a planetary gear carrier, a planetary gear shaft and an output spline in the electronic parking brake actuator according to the present invention after injection molding.
FIG. 11 is a schematic diagram illustrating a planetary gear carrier, a planetary gear shaft and an output spline in the electronic parking brake actuator according to the present invention after injection molding.
FIG. 12 is a schematic diagram illustrating an assembly among a planetary carrier, a planetary gear shaft and a planetary gear in the electronic parking brake actuator according to the present invention.
FIG. 13 is a schematic diagram illustrating an assembly process among a planetary carrier, a planetary gear shaft, and a planetary gear in the electronic parking brake actuator according to the present invention.

### DESCRIPTION OF EMBODIMENTS

The present invention will be further described below in combination with the drawings and specific embodiments.

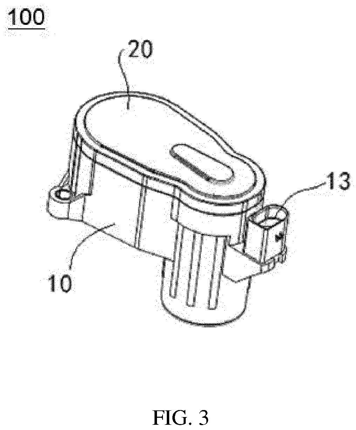

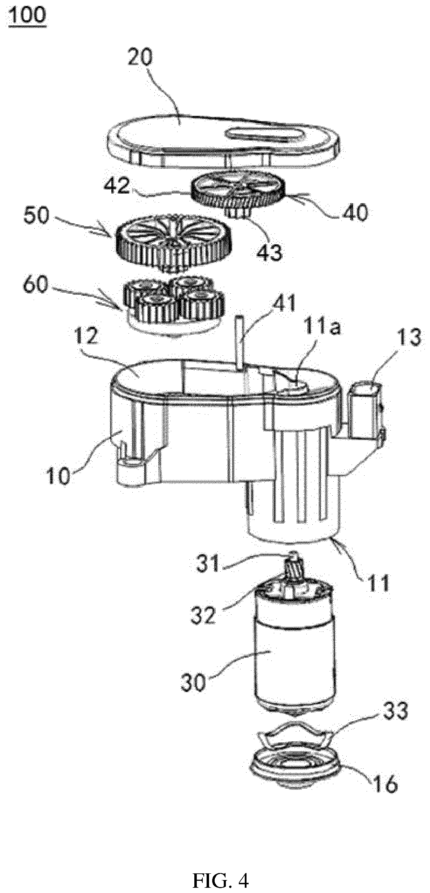

Referring to FIGS. 3 and 4, the electronic parking brake actuator 100 shown in the figures may include a gearbox body 10, a gearbox cover 20, a motor 30, a primary transmission gear assembly 40, a secondary transmission gear assembly 50 and a planetary gear transmission assembly 60.

The gearbox body 10 may be provided with a motor accommodation cavity 11 and a gear train accommodation cavity 12, and a connector socket 13 may be provided on the outer side of the gearbox body 10, and an electrical connector (not shown in the figures) may be provided in the connector socket 13. The first end 11a of the motor accommodation cavity 11 in the axial direction may be in communication with the gear train accommodation cavity 12. An inner gear ring 14 may be provided in the gear train accommodation cavity 12, and the gear train accommodation cavity 12 may be provided with an output spline hole 15 on the gearbox body corresponding to the center position of the inner gear ring 14.

The motor 30 may be provided in the motor accommodation cavity 11, the output shaft 31 of the motor 30 may extend into the gear train accommodation cavity 12, and a first gear 32 may be fixed on the output shaft 31 of the motor 30. A motor cover 16 may be covered at the second end 11b of the motor accommodation cavity 11 in the axial direction. The motor cover 16 encloses the motor 30 in the motor accommodation cavity 11. A motor wave spring 33 may be provided between the motor cover 16 and the motor 30, to adjust the axial gap of the motor 30. The lead wires on the motor 30 may be electrically connected to the electrical connector in the connector socket 13.

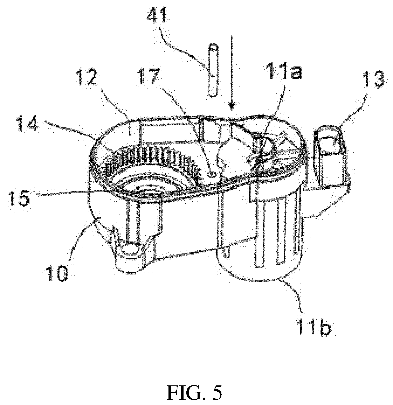

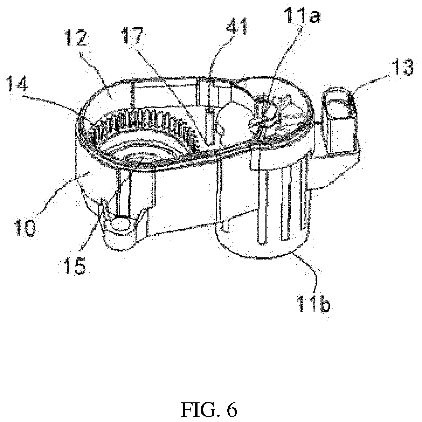

The primary transmission gear assembly 40 can be rotatably fitted in the gear train accommodation cavity 12. Specifically: referring to FIGS. 5 and 6, the lower end of the primary gear positioning pin 41 may be pressed into the primary gear positioning pin hole 17 of the gearbox body 10 by means of online press-fitting, and the primary transmission gear assembly 40 may be sleeved in the primary gear positioning pin 41, so as to reduce the deformation caused by the injection molding process of the primary gear positioning pin 41 (the primary gear positioning pin 41 and the gearbox body 10 are formed by one-time injection molding in the prior art). The online press-fitting method adopted in the present invention is specifically: the primary positioning pin 41 and the primary gear positioning pin hole 17 corresponding to the gearbox body 10 may be designed for interference fit, and the primary positioning pin 41 may be assembled to the hole corresponding to the gearbox by an online automatic press-fitting process. The press-in force and press-in stroke of the positioning pin 41 may be 100% monitored during the press-fitting process.

The primary transmission gear assembly 40 may be composed of a second gear 42 and a third gear 43 that are coaxially arranged and rotate synchronously, and the second gear 42 and the third gear 43 may be formed by one-time injection molding.

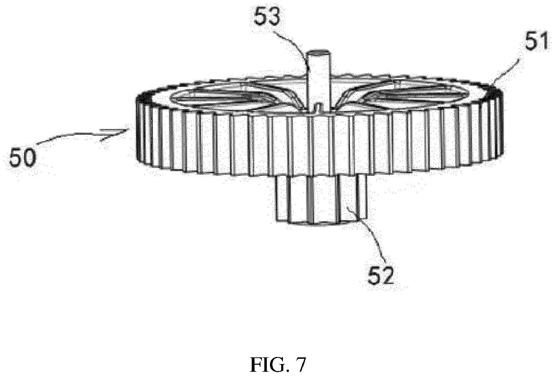

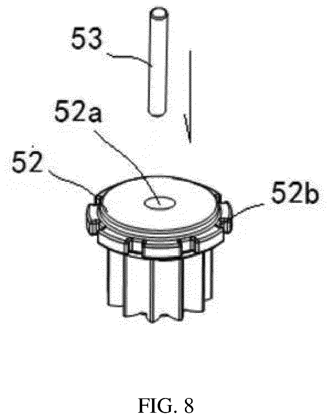

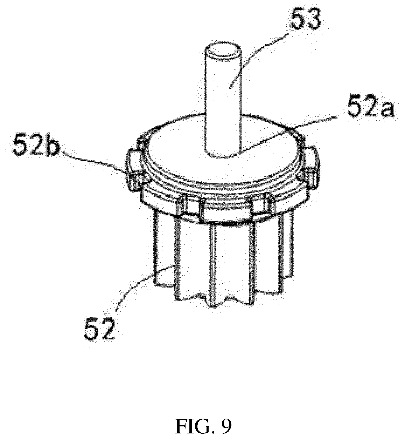

The secondary transmission gear assembly 50 can also be rotatably fitted in the gear train accommodation cavity 12. The secondary transmission gear assembly 50 may be composed of a fourth gear 51 and a sun gear 52 that are coaxially arranged and synchronously rotating. Referring to FIGS. 7 to 9, the secondary transmission gear assembly 50 may be mounted on the gearbox cover 20 through the secondary gear positioning pin 53. The upper end of the secondary gear positioning pin 53 may be assembled on the gearbox cover 20, and the lower end of the secondary gear positioning pin 53 may be press-fitted in the central hole 52a of the sun gear 52. The sun gear 52 may be manufactured by powder metallurgy, and the fourth gear 51 may be injection-molded through the middle part between the sun gear 52 and the secondary gear positioning pin 53 as an insert. A concave-convex structure 52b may be provided on the outer periphery of the sun gear 52, so that the fourth gear 51 and the sun gear 52 may be more firmly engaged.

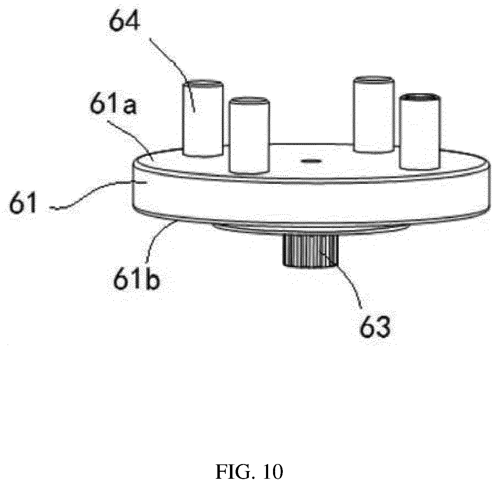

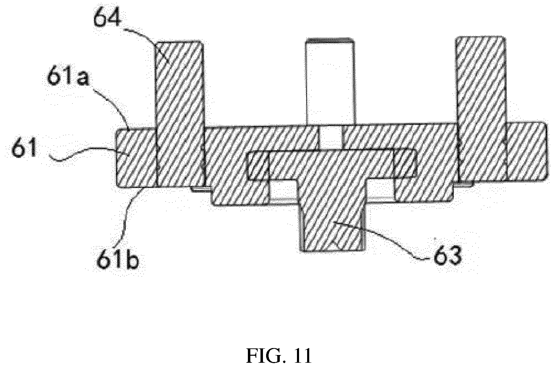

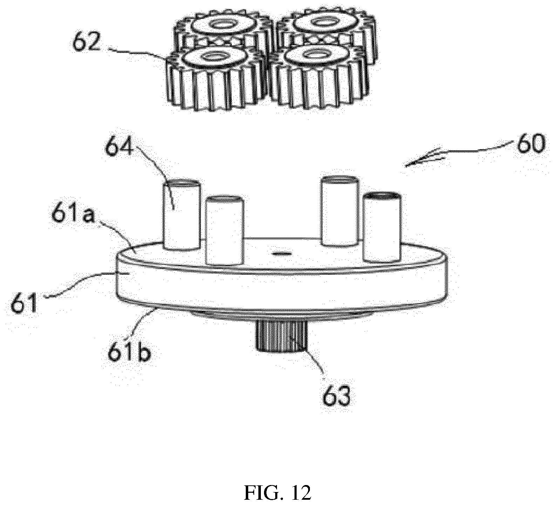

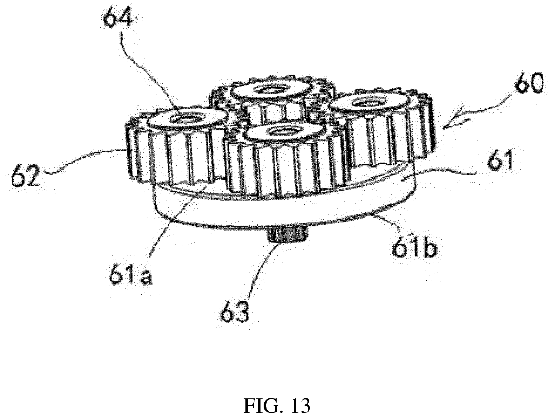

With reference to FIGS. 10 to 13, the planetary gear transmission assembly 60 may include a planetary gear carrier 61, four planetary gears 62 and an output spline 63. On the first end surface 61a of the planetary gear carrier 61 in the axial direction, four planetary gear shafts 64 are uniformly arranged in the circumferential direction, and the output spline 63 is arranged on the second end surface 61b of the planetary gear carrier 61 in the axial direction. Four planetary gear shafts 64, the planetary gear carrier 61 and the output spline 63 may be integrally molded by injection molding. Each planetary gear 62 may be assembled on the corresponding planetary shaft 64, so that the four planetary gears 62 may be rotatably arranged on the first end surface 61a of the planetary carrier 61 in the axial direction .

After the above-mentioned primary transmission gear assembly 40, the secondary transmission gear assembly 50, and planetary gear transmission assembly 60 are assembled, the gearbox cover 20 may cover the gearbox body 10, and the primary transmission gear assembly 40, the secondary transmission gear assembly 50 and the planetary gear transmission assembly 60 are packaged in the gear train accommodation cavity 12, and the output spline 63 extends out of the gearbox body 10 from the output spline hole 15 to output power.

After the above-mentioned primary transmission gear assembly 40, the secondary transmission gear assembly 50 and planetary gear transmission assembly 60 are assembled, the central axis of the first gear 32 is paralleled to the central axis of the planetary gear transmission assembly 60, the central axis of the secondary transmission gear assembly 50 and the central axis of the primary transmission gear assembly 40, and the central axis of the secondary transmission gear assembly 50 coincides with the central axis of the planetary gear drive assembly 60.

The engage relationship of the present invention is: the second gear 42 is engaged with the first gear 32, the fourth gear 51 is engaged with the third gear 43, the sun gear 52 is engaged with the four planet gears 62, and the four planet gears 62 are engaged with the inner ring gear 14.

The working principle of the present invention is as follows: the motor 30 drives the first gear 32 to rotate, the first gear 32 drives the second gear 42 to rotate through engaging, the second gear 42 drives the third gear 43 to rotate, and the third gear 43 drives the fourth gear 51 to rotate through engaging, the fourth gear 51 drives the sun gear 52 to rotate, the sun gear 52 drives the four planet gears 62 to rotate through engaging, and the four planet gears 62 revolve through engaging with the inner ring gear 14, and finally drive the planet gear carrier 61 to rotate, the planetary gear carrier 61 drives the output spline 63 to rotate, such that the power can be outputted.

## Claims

1. An electronic parking brake actuator (100) comprising:
a gearbox body (10) provided with a motor accommodation cavity (11) and a gear train accommodation cavity (12); the gear train accommodation cavity (12) being provided with an inner gear ring (14) inside, and the gearbox body (10) being provided with an output spline hole (15) at a position corresponding to a center of the inner gear ring (14);
a gearbox cover (20) configured for covering the gearbox body (10) and sealing the gear train accommodation cavity (12);
a motor (30) arranged in the motor accommodation cavity (11), an output shaft (31) of the motor (30) extending into the gear train accommodation cavity (12) and being fixed with a first gear (32);
a primary transmission gear assembly (40) rotatably fitted in the gear train accommodation cavity (12), the primary transmission gear assembly (40) comprising a second gear (42) and a third gear (43) that are coaxially arranged and rotate synchronously, wherein the second gear (42) is engaged with the first gear (32);
a secondary transmission gear assembly (50) rotatably fitted in the gear train accommodation cavity (12), the secondary transmission gear assembly (50) comprising a fourth gear (51) and a sun gear (52) that are coaxially arranged and rotate synchronously, wherein the fourth gear (51) is engaged with the third gear (43);
a planetary gear transmission assembly (60) comprising a planetary gear carrier (61), a plurality of planetary gears (62) and an output spline (63), the plurality of planetary gears (62) being rotatably mounted on a first end surface (61a) of the planetary gear carrier (61) in an axial direction, the output spline (63) being fixedly fitted on a second end surface (61b) of the planetary gear carrier (61) in the axial direction, all of the plurality of planetary gears (62) being engaged with the sun gear (52) and the inner ring gear (14), the output spline (63) extending out of the gearbox body (10) from the output spline hole (15);
**characterized in that**:
the primary transmission gear assembly (40) is sleeved on a primary gear positioning pin (41), a lower end of the primary gear positioning pin (41) is pressed into the gearbox body (10) in an online press-fitting manner; the secondary transmission gear assembly (50) is mounted on the gearbox cover (20) through a secondary gear positioning pin (53), wherein an upper end of the secondary gear positioning pin (53) is mounted on the gearbox cover (20), and a lower end of the secondary gear positioning pin (53) is press-fitted on the sun gear (52); the sun gear (52) is manufactured by powder metallurgy, and the fourth gear (51) is injection-molded with a middle part between the sun gear (51) and the secondary gear positioning pin (53) as an insert.

2. The electronic parking brake actuator according to claim 1, **characterized in that** a second end (11b) in the axial direction of the motor accommodation cavity (11) is covered with a motor cover (16), and the motor cover (16) encloses the motor (30) in the motor accommodation cavity (11), a motor wave spring (33) is provided between the motor cover (16) and the motor (30).

3. The electronic parking brake actuator according to claim 1, **characterized in that** a connector socket (13) is provided on an outer side of the gearbox body (10), and the connector socket (13) is provided with an electrical connector, the motor accommodation cavity (11) is communicated with the gear train accommodation cavity (12) at a first end (11a) in the axial direction.

4. The electronic parking brake actuator according to claim 1, **characterized in that** a central axis of the first gear (32) is paralleled to a central axis of the planetary gear transmission assembly (60), a central axis of the secondary transmission gear assembly (50) and a central axis of the primary transmission gear assembly (40), and the central axis of the secondary transmission gear assembly (50) coincides with the central axis of the planetary gear transmission assembly (60).

5. The electronic parking brake actuator according to claim 1, **characterized in that** the planetary gear carrier (61) is uniformly provided with a plurality of planetary gear shafts (64) circumferentially on the first end surface (61a) in the axial direction, and the plurality of planetary gear shafts (64), the planetary gear carrier (61) and the output spline (63) are integrally injection molded; each planetary gear (62) is assembled on a corresponding planetary gear shaft (64).

## Patentansprüche

1. Elektronisches Feststellbremsstellglied (100), umfassend:
ein Getriebegehäuse (10), das mit einem Motoraufnahmehohlraum (11) und einem Getriebezugaufnahmehohlraum (12) versehen ist; wobei der Getriebezugaufnahmehohlraum (12) im Inneren mit einem inneren Hohlrad (14) versehen ist, und das Getriebegehäuse (10) mit einer Abtriebsverzahnungsbohrung (15) an einer Position, die einer Mitte des inneren Hohlrads (14) entspricht, versehen ist;
eine Getriebeabdeckung (20), die zum Abdecken des Getriebegehäuses (10) und Abdichten des Getriebezugaufnahmehohlraums (12) konfiguriert ist;
einen Motor (30), der in dem Motoraufnahmehohlraum (11) angeordnet ist, wobei sich eine Ausgangswelle (31) des Motors (30) in den Getriebezugaufnahmehohlraum (12) erstreckt und mit einem ersten Zahnrad (32) befestigt ist;
eine primäre Getriebezahnradanordnung (40), die drehbar in den Getriebezugaufnahmehohlraum (12) eingepasst ist, wobei die primäre Getriebezahnradanordnung (40) ein zweites Zahnrad (42) und ein drittes Zahnrad (43) umfasst, die koaxial angeordnet sind und sich synchron drehen, wobei das zweite Zahnrad (42) mit dem ersten Zahnrad (32) in Eingriff steht;
eine sekundäre Getriebezahnradanordnung (50), die drehbar in den Getriebezugaufnahmehohlraum (12) eingepasst ist, wobei die sekundäre Getriebezahnradanordnung (50) ein viertes Zahnrad (51) und ein Sonnenrad (52) umfasst, die koaxial angeordnet sind und sich synchron drehen, wobei das vierte Zahnrad (51) mit dem dritten Zahnrad (43) in Eingriff steht;
eine Planetengetriebeanordnung (60), die einen Planetenradträger (61), mehrere Planetenräder (62) und eine Abtriebsverzahnung (63) umfasst, wobei die mehreren Planetenräder (62) drehbar an einer ersten Endfläche (61a) des Planetenradträgers (61) in einer axialen Richtung montiert sind, wobei die Abtriebsverzahnung (63) fest an einer zweiten Endfläche (61b) des Planetenradträgers (61) in der axialen Richtung angebracht ist, alle der mehreren Planetenräder (62) mit dem Sonnenrad (52) und dem inneren Hohlrad (14) in Eingriff stehen, wobei sich die Abtriebsverzahnung (63) aus dem Getriebegehäuse (10) von der Abtriebsverzahnungsbohrung (15) erstreckt;
**dadurch gekennzeichnet, dass**:
die primäre Getriebezahnradanordnung (40) auf einen primären Zahnradpositionierstift (41) aufgeschoben ist, ein unteres Ende des primären Zahnradpositionierstifts (41) in das Getriebegehäuse (10) durch Online-Presspassung eingepresst ist; die sekundäre Getriebezahnradanordnung (50) an der Getriebeabdeckung (20) durch einen sekundären Zahnradpositionierungsstift (53) montiert ist, wobei ein oberes Ende des sekundären Zahnradpositionierungsstifts (53) an der Getriebeabdeckung (20) montiert ist, und ein unteres Ende des sekundären Zahnradpositionierstifts (53) auf das Sonnenrad (52) pressgepasst ist; das Sonnenrad (52) durch Pulvermetallurgie hergestellt ist und das vierte Zahnrad (51) mit einem Mittelteil zwischen dem Sonnenrad (51) und dem sekundären Zahnradpositionierungsstift (53) als Einsatz spritzgegossen ist.

2. Elektronisches Feststellbremsstellglied nach Anspruch 1, **dadurch gekennzeichnet, dass** ein zweites Ende (11b) in axialer Richtung des Motoraufnahmehohlraums (11) mit einer Motorabdeckung (16) abgedeckt ist, und die Motorabdeckung (16) den Motor (30) in dem Motoraufnahmehohlraum (11) umschließt, wobei eine Motorwellenfeder (33) zwischen der Motorabdeckung (16) und dem Motor (30) vorgesehen ist.

3. Elektronisches Feststellbremsstellglied nach Anspruch 1, **dadurch gekennzeichnet, dass** eine Anschlussbuchse (13) an einer Außenseite des Getriebegehäuses (10) vorgesehen ist, und die Anschlussbuchse (13) mit einem elektrischen Anschluss versehen ist, wobei der Motoraufnahmehohlraum (11) mit dem Getriebezugaufnahmehohlraum (12) an einem ersten Ende (11a) in axialer Richtung in Verbindung steht.

4. Elektronisches Feststellbremsstellglied nach Anspruch 1, **dadurch gekennzeichnet, dass** eine Mittelachse des ersten Zahnrads (32) parallel zu einer Mittelachse der Planetengetriebeanordnung (60), einer Mittelachse der sekundären Getriebezahnradanordnung (50) und einer Mittelachse der primären Getriebeanordnung (40) ist, und die Mittelachse der sekundären Getriebeanordnung (50) mit der Mittelachse der Planetengetriebeanordnung (60) zusammenfällt.

5. Elektronisches Feststellbremsstellglied nach Anspruch 1, **dadurch gekennzeichnet, dass** der Planetenradträger (61) an der ersten Endfläche (61a) in axialer Richtung umlaufend und gleichmäßig mit mehreren Planetenradwellen (64) versehen ist, und die mehreren Planetenradwellen (64), der Planetenradträger (61) und die Abtriebsverzahnung (63) einstückig spritzgegossen sind; wobei jedes Planetenrad (62) auf einer entsprechenden Planetenradwelle (64) montiert ist.

## Revendications

1. Actionneur de frein de stationnement électronique (100) comprenant :
un corps de boîte de vitesses (10) pourvu d'une cavité de logement de moteur (11) et d'une cavité de logement de train d'engrenages (12) ; la cavité de logement de train d'engrenages (12) étant pourvue d'une couronne dentée intérieure (14) à l'intérieur de celle-ci, et le corps de boîte de vitesses (10) étant pourvu d'un trou de cannelure de sortie (15) à une position correspondant à un centre de la couronne dentée intérieure (14) ;
un couvercle de boîte de vitesses (20) configuré pour recouvrir le corps de boîte de vitesses (10) et sceller la cavité de logement de train d'engrenages (12) ;
un moteur (30) agencé dans la cavité de logement de moteur (11), un arbre de sortie (31) du moteur (30) s'étendant dans la cavité de logement de train d'engrenages (12) et étant fixé à un premier engrenage (32) ;
un ensemble d'engrenages de transmission primaires (40) ajusté de manière à pouvoir tourner dans la cavité de logement de train d'engrenages (12), l'ensemble d'engrenages de transmission primaires (40) comprenant un deuxième engrenage (42) et un troisième engrenage (43) qui sont agencés de manière coaxiale et qui tournent de manière synchrone, dans lequel le deuxième engrenage (42) est engagé avec le premier engrenage (32) ;
un ensemble d'engrenages de transmission secondaires (50) ajusté de manière à pouvoir tourner dans la cavité de logement de train d'engrenages (12), l'ensemble d'engrenages de transmission secondaires (50) comprenant un quatrième engrenage (51) et un engrenage solaire (52) qui sont agencés de manière coaxiale et qui tournent de manière synchrone, dans lequel le quatrième engrenage (51) est engagé avec le troisième engrenage (43) ;
un ensemble de transmission d'engrenages planétaires (60) comprenant un porte-engrenages planétaires (61), une pluralité d'engrenages planétaires (62), et une cannelure de sortie (63), la pluralité d'engrenages planétaires (62) étant montés de manière à pouvoir tourner sur une première surface d'extrémité (61a) du porte-engrenages planétaires (61) dans une direction axiale, la cannelure de sortie (63) étant ajustée fixement sur une seconde surface d'extrémité (61b) du porte-engrenages planétaires (61) dans la direction axiale, l'intégralité de la pluralité d'engrenages planétaires (62) étant engagés avec l'engrenage solaire (52) et la couronne dentée intérieure (14), la cannelure de sortie (63) s'étendant hors du corps de boîte de vitesses (10) depuis le trou de cannelure de sortie (15) ;
**caractérisé en ce que** :
l'ensemble d'engrenages de transmission primaires (40) est manchonné sur une broche de positionnement d'engrenages primaires (41), une extrémité inférieure de la broche de positionnement d'engrenages primaires (41) est pressée dans le corps de boîte de vitesses (10) d'une manière à ajustement sous presse en ligne ; l'ensemble d'engrenages de transmission secondaires (50) est monté sur le couvercle de boîte de vitesses (20) à travers une broche de positionnement d'engrenages secondaires (53), dans lequel une extrémité supérieure de la broche de positionnement d'engrenages secondaires (53) est montée sur le couvercle de boîte de vitesses (20), et une extrémité inférieure de la broche de positionnement d'engrenages secondaires (53) est ajustée sous presse sur l'engrenage solaire (52) ; l'engrenage solaire (52) est fabriqué par métallurgie des poudres, et le quatrième engrenage (51) est moulé par injection avec une partie centrale entre l'engrenage solaire (51) et la broche de positionnement d'engrenages secondaires (53) en tant qu'un insert.

2. Actionneur de frein de stationnement électronique selon la revendication 1, **caractérisé en ce qu'**une seconde extrémité (11b) dans la direction axiale de la cavité de logement de moteur (11) est recouverte par un couvercle de moteur (16), et le couvercle de moteur (16) enferme le moteur (30) dans la cavité de logement de moteur (11), un ressort ondulé de moteur (33) est prévu entre le couvercle de moteur (16) et le moteur (30).

3. Actionneur de frein de stationnement électronique selon la revendication 1, **caractérisé en ce qu'**une embase de connecteur (13) est prévue sur un côté extérieur du corps de boîte de vitesses (10), et l'embase de connecteur (13) est pourvue d'un connecteur électrique, la cavité de logement de moteur (11) est en communication avec la cavité de logement de train d'engrenages (12) à une première extrémité (11a) dans la direction axiale.

4. Actionneur de frein de stationnement électronique selon la revendication 1, **caractérisé en ce qu'**un axe central du premier engrenage (32) est parallèle à un axe central de l'ensemble de transmission d'engrenages planétaires (60), un axe central de l'ensemble d'engrenages de transmission secondaires (50) et un axe central de l'ensemble d'engrenages de transmission primaires (40), et l'axe central de l'ensemble d'engrenages de transmission secondaires (50) coïncide avec l'axe central de l'ensemble de transmission d'engrenages planétaires (60).

5. Actionneur de frein de stationnement électronique selon la revendication 1, **caractérisé en ce que** le porte-engrenages planétaires (61) est pourvu uniformément d'une pluralité d'arbres d'engrenages planétaires (64) de manière circonférentielle sur la première surface d'extrémité (61a) dans la direction axiale, et la pluralité d'arbres d'engrenages planétaires (64), le porte-engrenages planétaires (61) et la cannelure de sortie (63) sont moulés par injection d'un seul tenant ; chaque engrenage planétaire (62) est assemblé sur un arbre d'engrenages planétaires (64) correspondant.
